## Europäisches Patentamt
## European Patent Office
## Office européen des brevets

(19)

(11) Numéro de publication: **0 026 142**
**B1**

(12)

# FASCICULE DE BREVET EUROPEEN

(45) Date de publication du fascicule du brevet:
09.02.83

(51) Int. Cl.³: **G 21 C 7/12**

(21) Numéro de dépôt: **80401340.7**

(22) Date de dépôt: **19.09.80**

(54) **Dispositif d'accouplement et de désaccouplement à distance de deux éléments de grande longueur disposés coaxialement et bout à bout.**

(30) Priorité: **19.09.79 FR 7923314**

(43) Date de publication de la demande:
**01.04.81 Bulletin 81/13**

(45) Mention de la délivrance du brevet:
**09.02.83 Bulletin 83/6**

(84) Etats contractants désignés:
**BE CH DE GB IT LI NL**

(56) Documents cités:
**DE-A-1 800 789**
**DE-A-1 800 790**
**GB-A-1 251 338**
**US-A-3 698 756**

(73) Titulaire: **Framatome, Tour Fiat 1 place de la Coupole, F-92400 Courbevoie (FR)**

(72) Inventeur: **Lepetit, Jacques, 37-39, rue des Morillons, F-75015 Paris (FR)**
Inventeur: **Lafosse, Claude, 91, avenue Edouard Herriot, F-92350 Le Plessis Robinson (FR)**

(74) Mandataire: **Bouget, Lucien et al, CREUSOT-LOIRE 15 rue Pasquier, F-75383 Paris Cedex 08 (FR)**

BUNDESDRUCKEREI BERLIN

### Dispositif d'accouplement et de désaccouplement à distance de deux éléments de grande longueur disposés coaxialement et bout à bout

L'invention concerne un dispositif d'accouplement et de désaccouplement à distance de deux éléments de grande longueur disposés coaxialement et bout à bout, l'un de ces éléments étant un élément d'entrainement à déplacement axial entre deux positions extrêmes grâce à un moyen de déplacement et l'autre un élément entraîné exerçant une force résistant à l'entrainement.

Pour la commande de puissance des réacteurs nucléaires et pour l'arrêt d'urgence de ces réacteurs en cas d'incidents, on utilise des ensembles d'éléments absorbant les neutrons qu'on déplace entre les éléments combustibles dans le cœur du réacteur, afin d'augmenter ou de diminuer leur insertion à l'intérieur du cœur, ce qui tend à diminuer ou à augmenter la puissance dégagée par le cœur.

Le déplacement de ces ensembles de matériaux absorbants de grande longueur est généralement réalisé grâce à un élément d'entrainement de l'ensemble absorbant, constitué par une tige de grande longueur reliée à l'une de ses extrémités à l'ensemble absorbant et disposée coaxialement à cet ensemble.

Dans le cas des réacteurs à eau pressurisée en particulier, chaque ensemble absorbant est constitué par des tubes renfermant un matériau absorbant les neutrons et est inséré verticalement à l'intérieur des assemblages combustibles, constituant le cœur du réacteur, plus ou moins profondément grâce à une tige de commande disposée verticalement et à la partie inférieure de laquelle est fixé l'ensemble absorbant appelé barre de commande, cette tige de commande étant déplacée verticalement de façon exactement contrôlée grâce à un dispositif mécanique ou électromagnétique.

Pour obtenir l'arrêt d'urgence du réacteur, on libère la tige de commande, si bien que cette tige et l'élément absorbant qui lui est relié chutent dans le cœur du réacteur dans leur position d'insertion maximum sous l'effet de la gravité.

La tige de commande est généralement reliée par sa partie inférieure à la partie supérieure de l'ensemble absorbant grâce à un dispositif constitué par au moins deux pièces métalliques élastiques déformables disposées à la base de la tige de commande et une pièce d'écartement fixée à l'extrémité d'une tige centrale disposée suivant l'axe de la tige de commande dont le rôle est de maintenir en position les pièces métalliques élastiques dans des logements usinés à la partie supérieure de l'élément absorbant (voir US-A-3 698 756).

Lorsque la pièce d'écartement est maintenue au niveau des pièces élastiques, ces pièces ne peuvent pas se rapprocher l'une de l'autre sous l'effet du poids de l'élément absorbant lorsqu'on déplace verticalement cet élément suspendu à la tige de commande.

Dans les dispositifs connus et utilisés jusqu'ici, la pièce d'écartement doit être déplacée en translation axiale pour qu'on puisse libérer l'élément absorbant et le séparer de sa tige de commande. En effet, si l'on éloigne par translation axiale la pièce d'écartement des pièces déformables d'accrochage de l'élément absorbant, le poids de l'élément absorbant, lors d'un mouvement de la tige de commande vers le haut, provoque la déformation des pièces élastiques d'accrochage et ces pièces déformables sont conçues pour glisser alors à l'intérieur des logements de l'élément absorbant et libèrent cet élément, le mouvement de la tige de commande se poursuivant sans qu'il y ait entrainement de l'ensemble absorbant.

Cependant, pour réaliser le déplacement de la pièce d'écartement par translation axiale de la tige centrale, il est nécessaire d'accéder directement à la tige de commande pour effectuer manuellement le mouvement de translation vertical.

Dans les dispositifs connus et utilisés jusqu'ici, notamment pour les réacteurs à eau pressurisée, cette opération ne peut se faire qu'après avoir arrêté et dépressurisé le réacteur, et après avoir démonté soit le couvercle de la cuve sous pression contenant le cœur nucléaire, soit le carter étanche du mécanisme commandant le déplacement contrôlé de la tige de commande.

Il est nécessaire de procéder ainsi notamment lors des opérations de rechargement du réacteur en combustible, puisque préalablement à ces opérations il faut séparer les tiges de commande et les éléments absorbants. Sur les réacteurs à eau pressurisée cette opération de séparation requiert un temps assez long, qui allonge la période d'arrêt du réacteur, et des interventions manuelles dans une ambiance pouvant être contaminée ce qui impose de prendre des précautions particulières onéreuses et contraignantes.

D'autre part, au cours de ces opérations de rechargement, aussi bien dans le cas des réacteurs à eau sous pression que dans le cas des réacteurs à haute température ou à neutrons rapides refroidis par des métaux liquides, il peut être intéressant de disposer les tiges de commande en position haute après les avoir désaccouplées des ensembles absorbants. On facilite ainsi grandement les opérations de remplacement du combustible soit au moment du levage du couvercle de cuve, dans le cas des réacteurs à eau sous pression, soit lors du rechargement proprement dit dans le cas des réacteurs à haute température ou à neutrons rapides où le toit de la cuve reste en place pendant le rechargement.

On ne connaît pas jusqu'ici de dispositif d'accouplement ou de désaccouplement de deux éléments de grande longueur, tel qu'une tige de commande et un élément absorbant les neutrons d'un réacteur nucléaire, qui permette d'opérer de manière sûre, automatique, et à distance, donc dans tous les cas où il n'est pas possible d'accéder facilement à la zone de jonction entre les éléments, ou même lorsque cet accès est impossible et qu'il faut opérer de manière parfaitement étanche.

Le but de l'invention est donc de proposer un dispositif d'accouplement et de désaccouplement à distance de deux éléments de grande longueur disposés coaxialement et bout à bout, l'un de ces éléments étant un élément d'entrainement à déplacement axial entre deux positions extrêmes grâce à un moyen de déplacement et l'autre un élément entrainé exerçant une force résistante à l'entrainement, l'élément d'entrainement comportant à l'une de ses extrémités, pour assurer la jonction au moins deux parties à déformation élastique dans une direction perpendiculaire à l'axe des éléments, qui sont maintenues écartées en position de jonction, position dans laquelle elles s'engagent dans un logement ménagé à une extrémité de l'élément entrainé, par une pièce d'écartement à déplacement axial fixée à l'extrémité d'une tige centrale disposée suivant l'axe des éléments, ce dispositif devant permettre une automatisation des opérations d'accouplement et de désaccouplement dans des applications où la zone de jonction des éléments n'est pas accessible, les opérations devant de plus être réalisées de façon extrêmement sûre.

Dans ce but le dispositif comporte:

— une chemise interne cylindrique d'actionnement coaxiale à l'élément d'entrainement, montée rotative autour de son axe sur cet élément et solidaire, à l'une de ses extrémités, de la tige centrale portant la pièce d'écartement, cette pièce d'écartement n'étant pas symétrique de révolution par rapport à l'axe et ayant des dimensions telles que par rotation de la tige centrale autour de l'axe du dispositif, on puisse mettre la pièce en position d'écartement des parties élastiques de jonction ou en position hors service où elle n'est plus en contact avec les parties élastiques, permettant alors leur rapprochement,

— une goupille disposée transversalement par rapport à l'axe du dispositif fixée à l'extrémité de l'ensemble constitué par la chemise interne d'actionnement et la tige centrale, et opposée à l'extrémité solidaire de la pièce d'écartement,

— et une chemise externe d'actionnement, coaxiale à l'élément d'entrainement, de diamètre supérieur au diamètre de la chemise interne, disposée en position axiale fixe par rapport aux éléments et rotative autour de son axe, reliée à un moyen d'entrainement en rotation dans un sens et dans l'autre avec une amplitude de rotation égale à l'angle de rotation nécessaire pour déplacer la pièce d'écartement entre ses positions en et hors service et comportant sur sa surface latérale deux fentes longitudinales, le déplacement axial des éléments amenant, au voisinage d'une des positions extrêmes de ces éléments, la goupille à l'intérieur des fentes de la chemise d'actionnement qui peut alors déplacer en rotation l'ensemble portant la pièce d'écartement pour l'accouplement ou le désaccouplement des éléments de grande longueur.

Une forme d'enécution avantageuse de l'invention est constitueé far un dispositif d'accouplement et de désaccouplement fermettant, dans le cas où les éléments de grande longueur sont disposés verticalement, de rendres l'élément d'entrainement mobile entre une position basse de désaccouplement, et une position haute où il peut être maintenu verrouillé indépendamment de l'action de ses moyens de déplacement.

L'élément d'entrainement de cette forme d'enécution comporte à sa partie inférieure une rainure de verrouillage et la chemise externe d'actionnement comporte un pion dirigé vers l'intérieur de la chemise.

Lorsque l'élément d'entrainement est en position haute il est possible, par des mouvements combinés de translation de l'élément d'entrainement et de rotation de la chemise externe, de commander à distance l'engagement du pion dans la rainure et ainsi de constituer une liaison à baïonnette, qui permet le maintien en position haute de l'élément d'entrainement, de manière sûre et sans consommation d'énergie.

Afin de bien faire comprendre l'invention, on va maintenant décrire à titre d'exemple non limitatif, en se référant aux figures jointes en annexe, un mode de réalisation du dispositif d'accouplement et de désaccouplement suivant l'invention dans le cas d'une tige de commande associée à un ensemble absorbant se déplaçant verticalement dans le cœur d'un réacteur nucléaire à eau sous pression.

La figure 1 représente dans une vue en coupe par un plan passant par l'axe du dispositif, l'extrémité inférieure de ce dispositif, au niveau de la partie inférieure de la tige de commande et de la partie supérieure de la barre de commande.

Les figures 2 et 3 sont des vues en coupe suivant AA de la figure 1, les pièces élastiques déformables étant respectivement en position de service et en position hors service.

La figure 4 représente une vue en coupe par un plan passant par l'axe du dispositif, de la partie supérieure de ce dispositif, au niveau du boîtier étanche du mécanisme de commande de l'élément absorbant.

La figure 5 représente une vue en perspective du dispositif au niveau de la chemise externe d'actionnement, lorsque la tige de commande est en position basse.

La figure 6 représente une vue en perspective du même dispositif, lorsque la tige de commande est dans une position un peu au-dessus de sa position basse.

La figure 7 représente une vue en perspective du dispositif de verrouillage constituant la partie supérieure du mécanisme représenté à la figure 4.

La figure 8 est une vue en perspective de la tige de commande en position haute au niveau de la chemise externe d'actionnement.

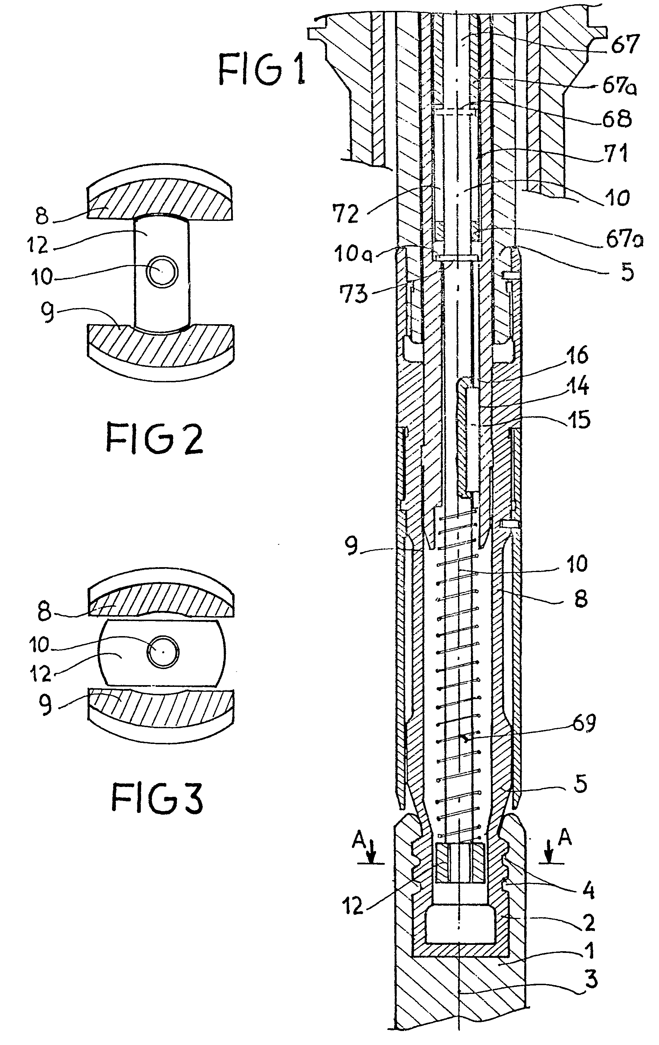

Sur la figure 1, on voit la partie supérieure de la structure 1 de l'élément absorbant les neutrons.

Dans sa partie supérieure représentée, cette structure 1 comporte un logement 2 à symétrie de révolution par rapport à l'axe 3 de l'élément absorbant à l'intérieur duquel sont usinées des rainures 4 constituant une surface d'accrochage pour le moyen de jonction entre la tige de commande 5 constituant l'élément d'entrainement et la structure 1 de l'ensemble absorbant constituant l'élément entrainé.

Les moyens de jonction sont constitués par deux lames élastiques 8 et 9 fixées sur la tige de commande 5 à son extrémité inférieure dont la section est visible sur les figures 2 et 3.

L'extrémité des lames élastiques 8 et 9 est usinée de façon à ce que ces lames puissent s'engager dans le logement 2 et que des rebords usinés sur les lames viennent s'engager dans les rainures 4.

La tige de commande 5 est reliée à un mécanisme d'entrainement permettant son déplacement dans la direction de l'axe 3 pour le déplacement correspondant de l'élément absorbant à l'intérieur du cœur du réacteur nucléaire.

Le mécanisme de déplacement de la tige de commande 5 n'a pas été représenté mais il peut être constitué par exemple par une crémaillère qui peut être fixée sur la tige de commande 5, ou même usinée sur cette tige de commande et actionnée par un pignon pour son déplacement axial.

Une tige centrale inférieure 10 est disposée suivant l'axe 3 de la tige de commande 5 et porte à son extrémité une pièce d'écartement 12 des lames 8 et 9, cette pièce d'écartement 12 se trouvant au niveau de l'extrémité des lames 8 et 9 engagée à l'intérieur du logement 2 de la structure de l'élément absorbant.

Cette pièce d'écartement 12 qui n'est pas symétrique de révolution par rapport à l'axe 3 permet de maintenir les lames 8 et 9 soit en position de service où la jonction est aussurée entre la tige de commande et l'élément absorbant (figure 2) soit en position hors service où les lames 8 et 9 peuvent se rapprocher et libérer l'élément absorbant (figure 3).

La tige centrale inférieure 10 est reliée à une chemise interne d'actionnement 14 par l'intermédiaire d'une clavette 15 disposée dans une rainure 16 de la chemise 14 et permettant de solidariser en rotation autour de l'axe 3 la tige centrale inférieure 10 et la chemise interne 14.

La tige centrale inférieure 10 comporte une collerette 10a qui vient buter sur un lamage 73 usiné dans la chemise 14. Un ressort 69 monté entre la chemise 14 et la pièce d'écartement 12 maintient en position basse la tige 10.

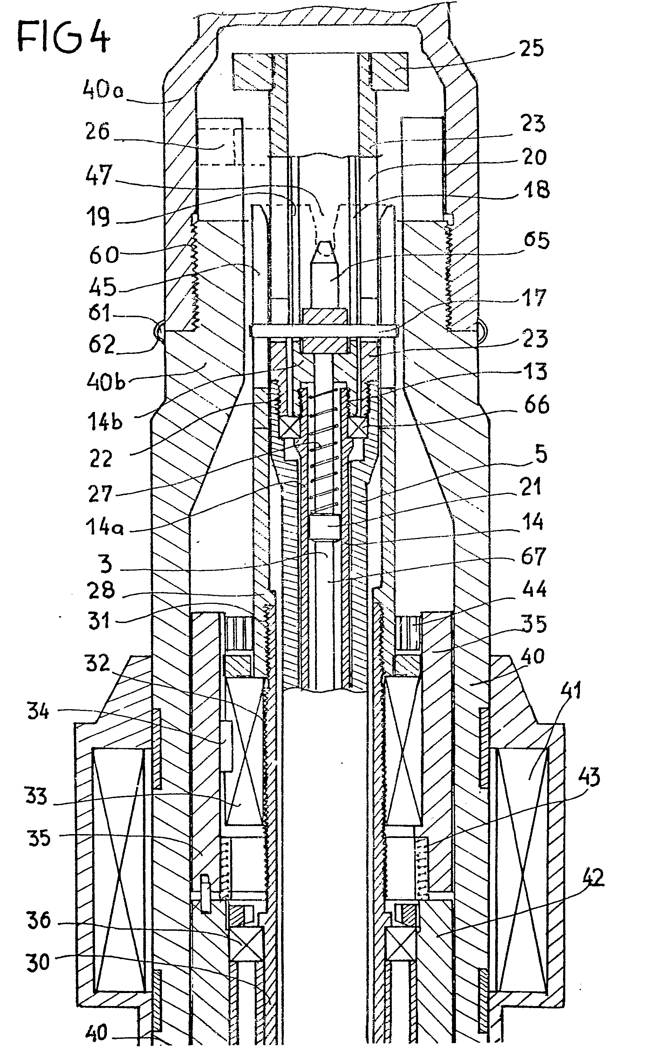

En se reportant à la figure 4, on voit que la chemise interne 14 est constituée par un tube de grande longueur 14a dont la partie inférieure est liée à la tige 10 (voir figure 1) et dont la partie supérieure 14b est constituée par une chemise reliée à la partie 14a par l'intermédiaire d'un filetage 13.

La chemise 14 coaxiale à la tige de commande 5 est montée rotative autour de son axe à l'intérieur de cette tige 5 grâce à des roulements tels que 66.

La tige centrale inférieure 10 comporte une goupille 68 qui s'engage dans deux rainures longitudinales 71 et 72 usinées dans une chemise annulaire 67a solidaire de la tige centrale supérieure 67.

La tige 67 comporte à sa partie supérieure une goupille 17 transversale par rapport à l'axe 3.

La goupille 17 est engagée dans des rainures longitudinales 18 et 19 découpées dans la surface latérale de la chemise 14b qui permettent de transmettre les mouvements de rotation entre la goupille 17 et la chemise d'actionnement 14 elle-même reliée à la tige centrale inférieure 10.

La tige centrale supérieure 67 porte des éléments tels que 21 permettant son guidage à l'intérieur de la chemise 14.

La goupille 17 est d'autre part engagée dans une ouverture 20 traversant la paroi latérale d'une pièce cylindrique 23 solidaire de la tige de commande 5 grâce à un filetage 22.

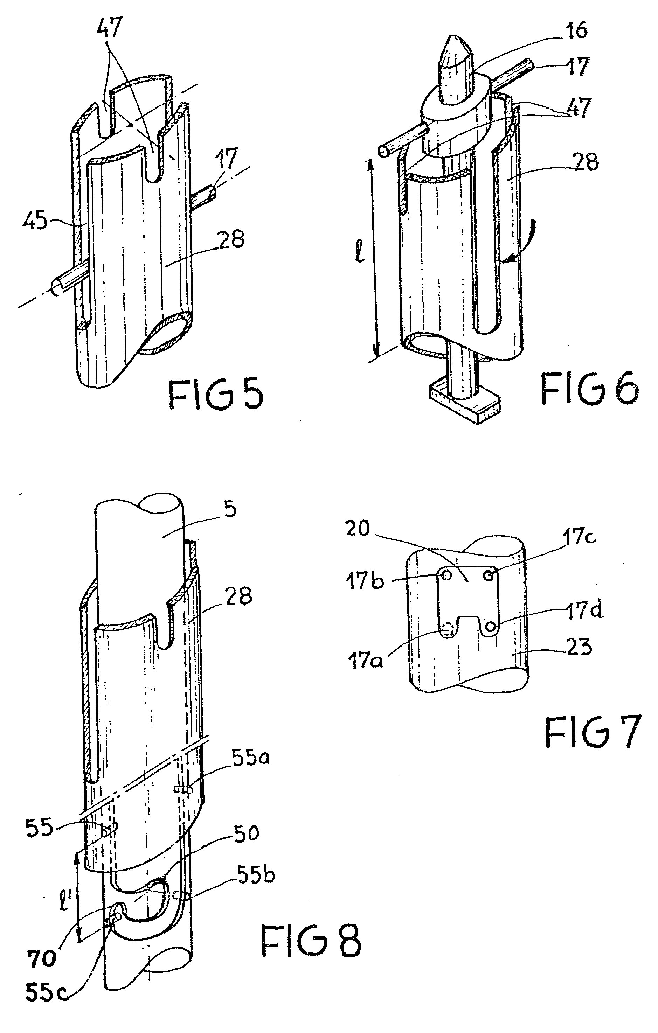

La forme de l'ouverture 20 pratiquée dans la pièce cylindrique 23 est représentée à la figure 7.

Cette pièce 23 dans laquelle s'engage la goupille 17 permet de verrouiller la position angulaire de la pièce 14, donc de la tige inférieure 10, c'est-à-dire de la pièce d'écartement 12 par rapport à la tige de commande 5 et donc d'interdire un accouplement ou un désaccouplement accidentel du dispositif.

La pièce 23 porte à son extrémité une butée 25 dont le rôle est de pouvoir écraser un amortisseur 26 pour ralentir la tige de commande 5 lors d'une chute qui pourrait se produire en cas de rupture accidentelle du dispositif de verrouillage en position haute de la tige de commande, lorsque celle-ci est séparée de l'élément absorbant.

Un ressort 27 est disposé entre la pièce de guidage 21 solidaire de la tige 67 et l'extrémité inférieure de la chemise 14b.

Une chemise externe 28 de plus grand diamètre que la chemise interne 14 est solidaire d'une vis 30 réalisée sous la forme d'une chemise comportant une partie filetée 31 pour son assemblage avec la chemise externe 28 et une partie filetée 32 sur sa surface externe en prise avec un écrou 33 solidaire grâce à une clavette 34 d'une pièce polaire 35 en métal magnétique.

La vis 30 est montée rotative grâce à des roulements tels que 36 à l'intérieur du carter étanche 40 à l'intérieur duquel se trouve la partie supérieure du mécanisme d'accouplement et de désaccouplement, solidaire du couvercle de la cuve du réacteur nucléaire.

La chemise externe 28 est donc fixe en translation axiale et mobile en rotation autour de l'axe 3 du dispositif.

La pièce polaire 35 peut être déplacée en translation axiale parallèlement à l'axe 3 grâce à une bobine 41 qui, lorsqu'elle est alimentée, aimante une pièce polaire fixe 42 qui attire la pièce 35 qui effectue alors un mouvement de translation axiale vers le bas.

La pièce 35 est rappelée dans sa position écartée de la pièce polaire 42 par le ressort 43 et par le ressort spirale 44 qui est lié à la vis 30 et à la chemise externe 28.

Lorsque la pièce polaire 35 effectue ses mouvements de translation dans un sens et dans l'autre, sous l'effet de la force magnétique et des ressorts respectivement, l'écrou 33 est entraîné dans un mouvement de même amplitude, qui entraîne la vis 30, immobilisée en translation axiale, dans un mouvement de rotation suivant un certain angle dans un sens et dans l'autre.

Dans le mode de réalisation décrit, cet angle est de 90°, ce qui correspond à l'angle de rotation de la pièce d'écartement 12 pour la faire passer de sa position de service où la jonction de la tige de commande et de l'élément absorbant est réalisée à sa position hors service où ces deux pièces sont désaccouplées.

Ainsi qu'il est visible à la figure 5, la chemise externe 28 comporte un premier jeu de fentes longitudinales 45 de grande longueur et un second jeu de fentes longitudinales 47 de plus faible longueur dans la direction axiale.

Lorsque la tige de commande 5 est en position basse, comme représenté à la figure 4, c'est-à-dire lorsque l'élément absorbant est dans sa position d'insertion maximale, la goupille 17, vient en position à l'intérieur des fentes de grande longueur 45 de la chemise externe 28, la position de la goupille 17 pouvant se situer dans un certain domaine entourant la position moyenne 50 de cette goupille représentée à la figure 5. En effet, d'un élément absorbant à un autre, certaines différences géométriques peuvent causer un certain déplacement de la position de la goupille 17 dans les fentes 45.

Lorsqu'on désire désaccoupler la tige de commande 5 et l'élément absorbant 1, on remonte la tige de commande à partir de sa position basse sur une certaine longueur l visible à la figure 6 et l'on fait tourner dans un sens la chemise externe 28 en alimentant la bobine 41.

La goupille 17 et les tiges centrales 67 et 10 sont alors, par rapport à la chemise 28, dans la position représentée à la figure 6 où après soulèvement de l'ensemble relié à la tige de commande et rotation d'un quart de tour de la chemise 28 provoqué par alimentation de la bobine 41, la goupille 17 est venue à l'aplomb des fentes courtes 47.

On voit à la figure 7, la position de la goupille 17 à l'intérieur de l'ouverture 20 ménagée dans la pièce cylindrique 23 pendant les phases représentées aux figures 5 et 6. En effet, pendant les phases du mouvement, l'ensemble relié à la tige de commande 5 s'est déplacé en translation de façon identique et la goupille 17 est restée en position verrouillée 17a à l'intérieur de l'ouverture 20 de la pièce 23. Dans cette position, la goupille 17 interdit tout mouvement de rotation de la chemise interne 14 qui pourrait provoquer un déverrouillage de la pièce d'écartement 12.

Si l'on redescend maintenant la tige de commande 5 et l'ensemble des pièces qui lui sont reliées dans sa position basse, c'est-à-dire sur une longueur l, on va déposer la goupille 17 dans les fentes courtes 47 avant la fin du mouvement d'amplitude l et le mouvement se poursuivra par déplacement relatif de la chemise interne 14 et de la tige centrale supérieure 67 qui provoque une compression du ressort 27.

Lors du mouvement relatif de la tige centrale supérieure 67 par rapport à la chemise 14, la tige centrale inférieure 10 reste en position de butée basse sur la chemise 14, par l'intermédiaire de la collerette 10a et du ressort 69, la pièce 67a coulissant librement autour de la tige 10 et de la goupille 68 du fait des rainures 71 et 72.

La goupille 17 liée à la tige centrale 67 se déplaçant relativement à l'ensemble lié en translation à la tige de commande 5, va venir en position 17b à l'intérieur de l'ouverture 20 de la pièce 23.

Dans cette position la clavette 17 peut se déplacer avec la chemise interne 14 en rotation autour de l'axe 3.

Si l'on coupe alors l'alimentation de la bobine 41, les ressorts 43 et 44 ramènent la chemise 28 dans sa position d'origine par la rotation inverse de la rotation d'un quart de tour effectuée précédemment.

Au cours de cette rotation d'un quart de tour, la goupille 17 engagée dans les fentes courtes est entraînée dans une rotation correspondante qui est transmise à la chemise interne 14 et par son intermédiaire à la tige 10 et à la pièce d'écartement 12 qui libère les lames 8 et 9.

La goupille est alors venue en position 17c à l'intérieur de l'ouverture 20.

Si l'on remonte la tige de commande 5, la détente du ressort 27 replace alors la goupille 17 en position 17d où le verrouillage angulaire est à nouveau réalisé.

Au cours de la remontée de la tige de commande, les lames élastiques 8 et 9 qui ne sont plus maintenues écartées par la pièce 12 libèrent l'élément absorbant qui sous l'effet de son poids rappoche l'une de l'autre les lames 8 et 9 et provoque un glissement relatif de ces lames et du logement 2 de l'élément 1.

La tige peut alors remonter librement.

Lorsque la tige de commande 5 parvient dans sa position haute comme représentée à la figure 8, une rainure 50 en forme de boucle, usinée dans la partie basse de cette tige de commande, vient se placer au niveau de la chemise externe 28 qui comporte un pion 55 dirigé vers l'intérieur de cette chemise, le pion 55 venant se placer à l'intérieur de la rainure 50.

Si l'on excite alors l'électro-aimant 41 on provoque comme décrit précédemment une rotation d'un quart de tour de la chemise externe 28 qui amène le pion 55 en position 55a.

Une remontée supplémentaire d'une longueur l' de la tige de commande au-delà de sa position haute utilisée lors des réglages de puissance du réacteur, fait passer le pion 55 en position 55b, ce qui provoque l'engagement du pion 55 dans la partie inférieure de la rainure 50, constituant un système de verrouillage à baïonnette.

Si l'on coupe maintenant l'alimentation de la bobine 41, la chemise externe 28 effectue une rotation d'un quart de tour inverse de la rotation précédente ce qui place le pion 55 en position de verrouillage 55c où la tige 5 est suspendue à la chemise 28 par l'intermédiaire du pion 55 sur lequel la tige de commande 5 repose par l'intermédiaire de l'extrémité 70 de la rainure en forme de boucle usinée dans la tige de commande 5.

La tige de commande 5 est alors suspendue en position haute indépendamment de son dispositif de déplacement qui assure sa retenue pendant les déplacements de la tige.

Si une rupture accidentelle de ce dispositif se produisait, la tige de commande 5 serait freinée en fin de course par l'amortisseur 26, la goupille 17 se plaçant en position 17e à l'intérieur de l'ouverture 20.

Le carter étanche 40 du dispositif est d'autre part constitué de plusieurs parties telles que 40a et 40b reliées par un filetage 60, un joint 61 et un cordon de soudure 62 assurant l'étanchéité de l'assemblage.

En cas de panne du dispositif de désaccouplement automatique qui vient d'être décrit, il est possible d'ouvrir le carter au niveau du joint 61 en usinant la soudure 62 et en dévissant la partie 40a du carter.

On accède ainsi à la partie supérieure filetée 65 de la tige 67 sur laquelle on peut venir fixer un outil muni d'une poignée pour soulever manuellement la tige 67. Lors du mouvement, la pièce 67a monte et après avoir effectué la course autorisée par le débattement de la goupille 68 dans les rainures 71 et 72, elle soulève la tige centrale inférieure 10 en comprimant le ressort 69. Le mouvement de la tige 10 éclipse la pièce d'écartement par rapport aux lames 8 et 9, ce qui permet alors le désaccouplement de la tige de commande 5 et de l'élément absorbant 1.

Cette manœuvre est donc tout à fait identique à ce qui était connu dans les dispositifs antérieurs.

On voit que les avantages du dispositif suivant l'invention sont de pouvoir réaliser l'accouplement et le désaccouplement de deux éléments allongés tels qu'une tige de commande et une barre de commande de réacteur nucléaire, même si la zone de jonction n'est pas accessible.

Dans le cas des tiges de commande et barres de commande des réacteurs nucléaires, cette possibilité d'action automatique à distance sur l'accouplement et le désaccouplement de la tige et de la barre permet de réaliser les opérations

de rechargement en combustible du réacteur beaucoup plus rapidement et sans interventions manuelles dans des zones qui peuvent être contaminées.

D'autre part, la possibilité de verrouiller la tige de commande en position haute permet également de faciliter ces opérations de rechargement.

Il est à noter que le dispositif de verrouillage utilise comme élément actif uniquement une bobine disposée autour du carter du mécanisme et agissant sur un système vis-écrou, les autres mouvements des pièces mobiles étant obtenus à partir du déplacement de la tige de commande ellemême. Les moyens de déplacement de cette tige de commande sont de toutes façons obligatoirement associés à cette tige de commande qui sert à la conduite du réacteur.

Mais l'invention ne se limite pas au mode de réalisation qui vient d'être décrit, elle en comporte au contraire toutes les variantes et l'on peut imaginer des modifications de points de détail sans pour autant sortir du cadre de l'invention.

C'est ainsi que la pièce 23 réalisant le verrouillage de la pièce d'écartement en position angulaire n'est pas absolument nécessaire et qu'il est possible d'envisager un dispositif ne comprenant pas de pièce de verrouillage. Il est bien évident également que la chemise externe d'actionnement 28 ne comportera pas forcément deux jeux de rainures longitudinales et qu'il est possible d'imaginer des systèmes plus simples où la goupille 17 vient se placer directement, lorsque la tige de commande est en position basse, dans un jeu de rainures permettant d'obtenir la rotation de la chemise interne et de la pièce d'écartement par rotation de la chemise externe.

Il est bien évident que les formes de réalisation décrites et représentées ne limitent pas l'invention et qu'on peut imaginer d'autres formes de réalisation, par exemple de la rainure 50 de la fermeture à baïonnette permettant le verrouillage en position haute de la tige de commande. On peut aussi fixer le pion de verrouillage sur la tige de commande et usiner la rainure dans laquelle il s'engage pour le verrouillage, dans la chemise externe d'actionnement.

Enfin l'invention s'applique non seulement aux réacteurs à eau pressurisée mais aussi aux réacteurs à haute température et aux réacteurs à neutrons rapides refroidis par des métaux liquides.

Plus généralement l'invention s'applique chaque fois qu'un élément de grande longueur est utilisé pour entrainer un autre élément de grande longueur qui lui est relié, la zone de jonction entre ces deux éléments d'entrainement et entrainé n'étant pas accessible. Ces éléments d'entrainement et entrainé peuvent être disposés verticalement ou non et se déplacer dans une direction quelconque correspondant à la direction de l'axe des éléments d'entrainement et entraîné.

## Revendications

1. Dispositif d'accouplement et de désaccouplement à distance de deux éléments de grande longueur disposés coaxialement et bout à bout, l'un des éléments étant un élément d'entraînement à déplacement axial entre deux positions extrêmes grâce à un moyen de déplacement et l'autre un élément entraîné exerçant une force résistant à l'entrainement, l'élément d'entrainement comportant à l'une des ses extrémités, pour assurer la jonction, au moins deux parties à déformation élastique dans une direction perpendiculaire à l'axe des éléments, maintenues écartées en position de jonction, où elles s'engagent dans un logement ménagé à l'une des extrémités de l'élément entrainé, par une pièce d'écartement à déplacement axial fixée à l'extrémité d'une tige centrale disposée suivant l'axe des éléments caractérisé par le fait qu'il comporte:

— une chemise interne cylindrique (14) d'actionnement coaxiale à l'élément d'entrainement (5) montée rotative autour de son axe sur cet élément (5) et solidaire en rotation autour de son axe, de la tige centrale (10—67) portant la pièce d'écartement (12), cette pièce d'écartement (12) n'étant pas symétrique de révolution par rapport à l'axe et ayant des dimensions telles que par rotation de la tige centrale (10—67), autour de l'axe du dispositif on puisse mettre la pièce (12) en position d'écartement des parties élastiques de jonction (8—9) ou en position hors service où elle n'est plus en contact avec les parties élastiques (8—9),

— une goupille (17) disposée transversalement par rapport à l'axe du dispositif fixée à l'extrémité de l'ensemble constitué par la chemise interne d'actionnement (14) et la tige centrale (10—67) opposée à l'extrémité solidaire de la pièce d'écartement (12),

— et une chemise externe d'actionnement (28) coaxiale à l'élément d'entrainement (5), de diamètre supérieur au diamètre de la chemise interne (14), disposée en position axiale fixe par rapport aux éléments d'entrainement (5) et entrainé (1), rotative autour de son axe, reliée à un moyen d'entrainement en rotation (30-33-35-41-43-44) dans un sens et dans l'autre avec une amplitude de rotation égale à l'angle de rotation nécessaire pour déplacer la pièce d'écartement (12) entre ses positions en et hors service et comportant sur sa surface latérale des fentes longitudinales (45), le déplacement axial des éléments (1—5) amenant, au voisinage d'une des positions extrêmes de ces éléments, la goupille (17) à l'intérieur des fentes (45) de la chemise externe d'actionnement (28) qui peut alors déplacer en rotation l'ensemble portant la pièce d'écartement (12) pour réaliser l'accouplement ou le désaccouplement des éléments d'entrainement (5) et entrainé (1).

2. Dispositif d'accouplement et de désaccouplement suivant la revendication 1 caractérisé par le fait que la tige centrale (10—67) comporte une partie inférieure (10) solidaire en rotation de la chemise interne (14) et portant la pièce d'écartement (12) et une partie supérieure (67) portant la goupille transversale (17), ces deux parties (10—67) de la tige centrale étant montées solidaires en rotation et coulissantes dans la direction axiale grâce à un montage comportant deux butées permettant un coulissement relatif d'une certaine amplitude.

3. Dispositif d'accouplement et de désaccouplement suivant la revendication 2 caractérisé par le fait que la chemise externe (28) comporte au moins deux jeux de fentes (45—47) pour orienter la goupille transversale (17), en deux positions verticales différentes et que l'élément d'entrainement (5) est solidaire d'un moyen de verrouillage de la tige centrale (10—67) empêchant son déplacement en rotation, constitué par une chemise cylindrique (23) ayant pour axe l'axe de la tige (10—67) et comportant sur sa surface latérale une lumière (20) traversant cette paroi, à l'intérieur de laquelle s'engagent les extrémités de la goupille (17) en position de verrouillage ou de déverrouillage par mouvement relatif de l'élément d'entrainement (5) et de la partie supérieure (67) de la tige centrale lorsque celle-ci repose par l'intermédiaire d'un jeu de fentes (45—47) sur la chemise externe.

4. Dispositif d'accouplement et de désaccouplement suivant d'une quelconque des revendications 1, 2 et 3 dans le cas où l'élément d'entrainement est mobile entre une position extrême où a lieu le désaccouplement et une autre position extrême où il peut être maintenu indépendamment de l'action de son moyen de déplacement, caractérisé par le fait que l'élément d'entrainement (5) comporte, à son extrémité venant à l'intérieur de la chemise externe d'actionnement (28), lorsque l'élément est dans sa position extrême où il est maintenu désaccouplé, une rainure de verrouillage (50) et que la chemise externe d'actionnement (28) est solidaire d'un pion (55) dirigé vers l'intérieur de la chemise, le pion s'engageant dans la rainure lorsque l'élément est en position extrême, sous l'effet des mouvements de translation de l'élément d'entrainement (5) et des mouvements de rotation de la chemise externe (28), pour constituer avec la rainure (50) une liaison à baïonnette maintenant l'élément (5) désaccouplé en position extrême.

5. Dispositif d'accouplement et de désaccouplement suivant l'une quelconque des revendications 1, 2 et 3 dans le cas où l'élément d'entrainement est mobile entre une position extrême où a lieu le désaccouplement et une autre position extrême où il peut être maintenu indépendamment de l'action de son moyen de déplacement, caractérisé par le fait que l'élément d'entrainement (5) comporte, à son extrémité venant à l'intérieur de la chemise externe d'actionnement (28), lorsque l'élément est dans sa position extrême où il est maintenu désaccouplé, un pion dirigé vers l'extérieur, c'est-à-dire vers la surface intérieure de la chemise externe (28) et que la chemise externe d'actionnement comporte une rainue de verrouillage, le pion s'engageant dans la rainure, lorsque l'élément est en position extrême, sous l'effet des mouvements de translation de l'élément d'entrainement et des mouvements de rotation de la chemise externe, pour constituer avec la rainure une liaison à baïonnette maintenant l'élément (5) désaccouplé en position extrême.

## Patentansprüche

1. Vorrichtung zum Fernan- und -abkuppeln von zwei koaxial zusammenstoßend angeordneten langen Elemente, wobei das eine ein zwischen zwei Endstellungen durch Verschiebemittel axial bewegliches Antriebselement und das andere ein gegen die Antriebsbewegung wirkendes angetriebenes Element ist, und zur Herstellung der Verbindung das Antriebselement an einem Ende mindestens zwei senkrecht zur Elementenachse elastisch verformbare Teile aufweist, die in der Verbindungsstellung, in welcher letztere in einen an einem Ende des angetriebenen Elementes angeordneten Sitz eingreifen, durch ein axial verschiebbares Spreizteil auseinandergehalten werden, das am Ende einer gemäß der Elementenachse angeordneten Zentralstange befestigt ist, dadurch gekennzeichnet, daß sie folgende Merkmale umfaßt:

— eine innere koaxial zum Antriebselement (5) betätigbare Zylinderbüchse (14), welche auf diesem Element (5) um ihre Achse drehbar montiert ist und drehfest um ihre Achse mit der das Spreizteil (12) tragende Zentralstange (10—67) verbunden ist, wobei sich dieses Spreizteil (12) unsymmetrisch zur Achse dreht und so dimensioniert ist, daß man durch Drehen der Zentralstange (10—67) um die Achse der Vorrichtung das Spreizteil (12) in die Spreizstellung der elastischen Verbindungsteile (8—9) oder außer Eingriff bringen kann, wo es nicht mehr mit den elastischen Teilen (8—9) in Kontakt ist,

— ein quer zur Achse der Vorrichtung angeordneter Stift (17), welcher am Ende des aus der betätigbaren Innenbüchse (14) und der Zentralstange (10—67) bestehenden Bauteils befestigt und dem mit dem Spreizteil (12) fest verbundenen Ende entgegengesetzt ist,

— und eine koaxial zum Antriebselement (5) betätigbare Außenbüchse (28) mit einem größeren Durchmesser als der Durchmesser der Innenbüchse (14), die drehbar um ihre Achse in einer zu den Antriebs- (5) und angetriebenen Elemente (1) feststehenden axialen Stellung angeordnet und mit einem jeweils in die eine und andere Richtung drehbaren Antriebsmittel (30-33-35-41-43-44) verbunden ist, mit einem Drehbewegungsausschlag gleich dem erforderlichen Drehwinkel um das Spreizteil (12) zwischen seinen In- und Außereingriffstellungen zu verschieben, und die auf seiner Seitenfläche Längsschlitze (45) aufweist, wobei der Stift (17) durch die Axialverschiebung der Elemente (1—5) in unmittelbarer Nähe einer der Endstellungen dieser Elemente im Inneren der Schlitze (45) der betätigbaren Außenbüchse (28) verstellt wird, die nun das Bauteil mit dem Spreizteil (12) drehen kann um die Antriebs- (5) und angetriebenen (1) Elemente an- und abzukuppeln.

2. Vorrichtung nach Anspruch 1, dadurch gekennzeichnet, daß die Zentralstange (10—67) ein unteres mit der Innenbüchse (14) drehfest verbundenes Teil (10) mit dem Spreizteil (12) sowie ein Oberteil (67) mit dem Querstift (17) aufweist, wobei diese beiden Teile (10—67) der Zentralstange drehfest und in axialer Richtung über eine Anordnung mit zwei Anschlägen gleitbar montiert sind, die eine Relativgleitung mit einem bestimmten Ausschlag zuläßt.

3. Vorrichtung nach Anspruch 2, dadurch gekennzeichnet, daß zum Verstellen des Querstiftes (17) die Außenbüchse (28) mindestens zwei in zwei unterschiedlichen Senkrechtstellungen angeordneten Satz Schlitze (45—47) aufweist, und daß, um dessen Drehbewegung zu verhindern, das Antriebselement (5) mit einem aus einer Zylinderbüchse (23) bestehenden Verriegelungsmittel der Zentralstange (10—67) fest verbunden ist, wobei die Zylinderbüchse (23), deren Achse mit der Achse der Stange (10—67) zusammenfällt, auf ihrer Seitenfläche eine durch diese Wand durchgehende Öffnung (20) aufweist, in welche die Enden des Stiftes (17) durch Relativbewegung des Antriebselementes (5) und des Oberteils (67) der Zentralstange in der Verriegelungs- und Entriegelungsstellung eingreifen, wenn sich diese über ein Satz Schlitze (45—47) auf der Außenbüchse abstützt.

4. Vorrichtung nach einem der Ansprüche 1, 2 und 3, wenn das Antriebselement zwischen einer Endstellung zum Abkuppeln und einer anderen Endstellung verstellbar ist, wo es, unabhängig von der Wirkung seines Bewegungsmittels, festgehalten werden kann, dadurch gekennzeichnet, daß das Antriebselement (5) an seinem Ende eine Verriegelungsnut (50) aufweist, das in das Innere der betätigbaren Außenbüchse (28) eingeführt wird, wenn das Element in seiner abgekuppelten Endstellung verbleibt, und daß die betätigbare Außenbüchse (28) einen nach innen in die Büchse gerichteten Zapfen (55) aufweist, wobei der Zapfen durch die Translationsbewegungen des Antriebselementes (5) und die Drehbewegungen der Außenbüchse (28) in die Nut eingreift, wenn das Element in der Endstellung ist, um mit der Nut (50) eine Bajonettverbindung zu bilden, die das Element (5) in der abgekuppelten Endstellung festhält.

5. Vorrichtung nach einem der Ansprüche 1, 2 und 3, wenn das Antriebselement zwischen einer Endstellung zum Abkuppeln und einer anderen Endstellung verstellbar ist, wo es, unabhängig von der Wirkung seines Bewegungsmittels, festgehalten werden kann, dadurch gekennzeichnet, daß das Antriebselement (5) an seinem Ende, das in das Innere der betätigbaren Außenbüchse (28) eingeführt wird, wenn das Element in seiner abgekuppelten Endstellung verbleibt, einen nach außen, d. h. zur Innenfläche der Außenbüchse (28) hin gerichteten Zapfen (28) aufweist, und daß die betätigbare Außenbüchse eine Verriegelungsnut aufweist, wobei der Zapfen durch die Translationsbewegungen des Antriebselementes und die Drehbewegungen der Außenbüchse in die Nut eingreift, wenn das Element in der Endstellung ist, um mit der Nut eine Bajonettverbindung zu bilden, die das Element (5) in der abgekuppelten Endstellung festhält.

## Claims

1. Device for the remote coupling and uncoupling of two elements of great length arranged coaxially and end to end, one of the elements being a drive element with axial displacement between two extreme positions by virtue of displacement means and the other being a driven element exerting a force resistant to the drive, the drive element possessing at one of its ends, to make the junction, at least 2 parts undergoing elastic deformation in a direction perpendicular to the axis of the elements, these parts being held apart in the junction position, in which they engage in a receptacle provided at one of the ends of the driven element, by a spacing piece with axial displacement which is fixed to the end of a central rod arranged along the axis of the elements, characterised in that it comprises:
— an inner cylindrical actuating sleeve (14) which is coaxial to the drive element (5) and is mounted to rotate about its axis on this element (5) and which is fixed in rotation about its axis to the central rod (10—67) carrying the spacing piece (12), this spacing piece (12) not being symmetrical in its revolution relative to the axis and having such dimensions that, as a result of the rotation of the central rod (10—67) about the axis of the device, the piece (12) can be put into the position for spacing the elastic junction parts (8—9) apart or into the inoperative position in which it is no longer in contact with the elastic parts (8—9),
— a pin (17) which is arranged transversely in relation to the axis of the device and which is fixed to the end of the assembly, consisting of the inner actuating sleeve (14) and the central rod (10—67), opposite the end fixed to the spacing piece,
— and an outer actuating sleeve (28) which is coaxial to the drive element (5) and has a diameter greater than the diameter of the inner sleeve (14) and which is arranged, in an axial position fixed in relation to the drive element (5) and driven element (1), rotatably about its axis, and is connected to a means for driving in rotation (30—33—35—41—43—44) in one direction and in the other direction with an amount of rotation equal to the angle of rotation necessary to displace the spacing part (12) between its operative and inoperative positions, and possessing longitudinal slots (45) on its lateral surface, the axial displacement of the elements (1—5) bringing, in the vicinity of one of the extreme positions of these elements, the pin (17) within the slots (45) of the outer actuating sleeve (28) which can then displace in rotation the assembly carrying the spacing piece (12) so as to effect the coupling or uncoupling of the drive element (5) and driven element (1).

2. Coupling and uncoupling device according to Claim 1, characterised in that the central rod (10—67) possesses a lower part (10) fixed in rotation to the inner sleeve (14) and carrying the spacing piece (12), and an upper part (67) carrying the transverse pin (17), these two parts (10—67) of the central rod being mounted fixed in rotation and so as to slide in an axial direction by means of an arrangement comprising 2 stops allowing relative sliding of a certain amount.

3. Coupling and uncoupling device according to Claim 2, characterised in that the outer sleeve (28) possesses at least 2 sets of slots (45—47) so as to orientate the transverse pin (17) in 2 different vertical positions, and in that the drive element (5) is fixed to a means for locking the central rod (10—67), preventing it from being displaced in rotation, this locking means consisting of a cylindrical sleeve (23), the axis of which is the axis of the rod (10—67) and which has on its lateral surface an aperture (20) passing through this wall, within which engage the ends of the pin (17) in the locking or unlocking position as a result of a relative movement of the drive element (5) and of the upper part (67) of the central rod when the latter rests on the outer sleeve by way of a set of slots (45—47).

4. Coupling and uncoupling device according to any one of Claims 1, 2 and 3, in a case where the drive elements is movable between an extreme position where uncoupling takes place and another extreme position where it can be retained independently of the action of its displacement means, characterised in that the drive element (5) possesses a locking groove (50) at its end penetrating within the outer actuating sleeve (28) when the element is in its extreme position where it is kept uncoupled, and in that the outer actuating sleeve (28) is fixed to a stud (55) directed towards the inside of the sleeve, the stud engaging in the groove, when the element ist in the extreme position, under the effect of the translatory movements of the drive element (5) and the rotational movements of the outer sleeve (28), so as to constitute together with the groove (50) a bayonet connection keeping the uncoupled element (5) in its extreme position.

5. Coupling and uncoupling device according to any one of Claims 1, 2 and 3, in the case where the drive element is movable between an extreme position in which uncoupling takes place and another extreme position in which it can be reatined independently of the action of its displacement means, characterised in that the drive element (5) possesses, at its end penetrating within the outer actuating sleeve (28) when the element is in its extreme position in which it is kept uncoupled, a stud directed towards the outside, that is to say towards the inner surface of the outer sleeve (28), and in that the outer actuating sleeve possesses a locking groove, the stud engaging in the groove, when the element is in its extreme position, under the effect of the translatory movements of the drive element and the rotational movements of the outer sleeve, so as to constitute together with the groove a bayonet connection keeping the uncoupled element (5) in its extreme position.

FIG 1

FIG 2

FIG 3

# FIG 4

FIG 5

FIG 6

FIG 7

FIG 8